# EUROPEAN PATENT APPLICATION

(11) **EP 4 708 531 A1**
(43) Date of publication of application: **11.03.2026**
(21) Application number: 25200221.7
(22) Date of filing: 04.09.2025
(51) Int. Cl.: H01M 50/342, H01M 50/655

(54) **VENT PLATE, METHOD FOR MANUFACTURING THE SAME, AND SECONDARY BATTERY INCLUDING THE SAME**

(30) Priority: 06.09.2024 KR 20240121631
(71) Applicant: Samsung SDI Co., Ltd., Yongin-si, Gyeonggi-do 17084 (KR)
(72) Inventor: LEE, Jeawoan, 17084 Yongin-si, Gyeonggi-do (KR)
(74) Representative: Gulde & Partner

(57) **Abstract**

A vent plate includes a first vent member in an electrolyte injection port of a case of a secondary battery and a second vent member coupled to the first vent member. The first vent member includes a head portion on an outside of the case and a protrusion protruding from the head portion toward an inside of the case and in the electrolyte injection port.

## Description

### BACKGROUND

### 1. Field

The present invention relate to a vent plate, method for manufacturing the same, and secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

As the secondary battery is charged and/or discharged, gas may be generated inside the secondary battery. In this case, internal gas may cause deformation of the electrode assembly or the like, which may cause a short circuit inside the electrode assembly. Accordingly, the safety of the secondary battery may be deteriorated.

The above information disclosed in this Background section is for enhancement of understanding of the background of the present invention, and therefore, it may contain information that does not constitute related (or prior) art.

### SUMMARY

Embodiments of the present invention provide a vent plate, a method for manufacturing the vent plate, and secondary battery including the vent plate.

These and other aspects and features of the present invention will be described in or will be apparent from the following description of embodiments of the present invention.

A vent plate according to an embodiment of the present invention includes a first vent member in an electrolyte injection port of a case of a secondary battery and a second vent member coupled to the first vent member, wherein the first vent member may include a head portion on the outside of the case and a protrusion protruding from the head portion toward the inside of the case and in the electrolyte injection port.

According to an embodiment, a diameter of the head portion may be greater than a diameter of the electrolyte injection port, and a diameter of the second vent member may be greater than the diameter of the head portion.

According to an embodiment, the second vent member may be coupled to a lower surface of the head portion.

According to an embodiment, the second vent member may include a first region coupled to the lower surface of the head portion and a second region outside the first region and coupled to the case.

According to an embodiment, the second region may be outside the electrolyte injection port.

According to an embodiment, the second vent member may include a rupture portion in at least a portion between the first region and the second region.

According to an embodiment, the second vent member may be a thin film.

According to an embodiment, a thickness of the second vent member may be less than a thickness of the case.

According to an embodiment, the vent plate may further include a third vent member spaced apart from the first vent member and joined to the second vent member.

According to an embodiment, a diameter of the third vent member may be greater than a diameter of the second vent member.

According to an embodiment, the second vent member may be coupled to a lower surface of the head portion, and the third vent member may be coupled to at least a portion of an upper surface of the second vent member.

According to an embodiment, the second vent member may be coupled to at least a portion of an upper surface of the head portion, and the third vent member may be coupled to at least a portion of a lower surface of the second vent member.

According to an embodiment, the second vent member may include a first region coupled to the head portion and a second region outside the first region and coupled to the third vent member, and the third vent member may include a third region outside the second region and coupled to the case.

According to an embodiment, a material of the first vent member, a material of the third vent member, and a material of the case may be same as each other.

According to an embodiment, the vent plate may further include at least one connecting member connecting the first vent member and the third vent member.

A secondary battery according to an embodiment of the present invention may include an electrode assembly including a positive electrode, a separator, and a negative electrode, a case configured to accommodate the electrode assembly, an electrolyte injection port on one surface of the case, and a vent plate coupled to the electrolyte injection port, wherein the vent plate may include a first vent member including a head portion on the outside of the case and a protrusion protruding from the head portion toward the inside of the case and in the electrolyte injection port and a second vent member coupled to the first vent member.

According to an embodiment, the case may include stainless steel (SUS).

According to an embodiment, the second vent member may be a thin film.

According to an embodiment, a thickness of the second vent member may be less than a thickness of the case.

A secondary battery according to an embodiment of the present invention may include an electrode assembly including a positive electrode, a separator, and a negative electrode, a case configured to accommodate the electrode assembly, an electrolyte injection port on one surface of the case, and a vent plate coupled to the electrolyte injection port, wherein the vent plate may include a first vent member including a head portion on the outside of the case and a protrusion protruding from the head portion toward the inside of the case and in the electrolyte injection port and a second vent member coupled to the first vent member. The case may include a case body having one opened surface and a cover seated on the opened surface and coupled to the case body. The case body may include an accommodation portion in which the electrode assembly is accommodated and a flange extending outward from an upper end of the accommodation portion, and the cover may be coupled to the flange.

A method for manufacturing a secondary battery according to an embodiment of the present invention may include preparing a first vent member including a head portion on an outside of a case of the secondary battery and a protrusion protruding from the head portion toward the inside of the case and in an electrolyte injection port of the secondary battery, coupling a second vent member to at least a portion of the head portion, and coupling a third vent member to at least a portion of the second vent member so as to be spaced apart from the first vent member.

According to some embodiments of the present invention, the vent plate may be configured to both serve as a safety vent and seal the electrolyte injection port. That is, in response to the internal gas pressure of the secondary battery increasing, the second vent member of the vent plate may rupture, causing the internal gas of the secondary battery to be discharged to the outside. Accordingly, the safety of the secondary battery may be improved.

These and other aspects and features of the present invention will be described in or will be apparent from the following description of embodiments of the present invention.

However, aspects and features of the present invention are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 illustrates an exploded perspective view showing an example of a secondary battery according to an embodiment of the present invention;
FIG. 2 illustrates an example of a secondary battery according to an embodiment of the present invention;
FIG. 3 illustrates a cross-sectional view showing an example of a vent plate according to an embodiment of the present invention;
FIG. 4 illustrates a front view showing an example of the vent plate according to an embodiment of the present invention;
FIG. 5 illustrates a front view showing an example of a vent plate according to another embodiment of the present invention;
FIG. 6 illustrates a cross-sectional view showing an example of a vent plate according to an embodiment of the present invention;
FIG. 7 illustrates a cross-sectional view showing an example of a vent plate according to an embodiment of the present invention;
FIG. 8 illustrates a cross-sectional view showing an example of a vent plate according to an embodiment of the present invention;
FIG. 9 illustrates a front view showing an example of a vent plate according to an embodiment of the present invention;
FIG. 10 illustrates a cross-sectional view showing an example of a vent plate according to an embodiment of the present invention; and
FIG. 11 illustrates a flowchart showing an example of a method for manufacturing a vent plate according to an embodiment of the present invention.

### DETAILED DESCRIPTION

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present invention, the sizes and relative sizes of layers and regions shown in the drawings may be exaggerated for clarity of explanation. That is, the sizes shown in the drawings are only for convenience of understanding and are not limited thereto. In addition, the same reference numerals denote the same elements throughout the specification.

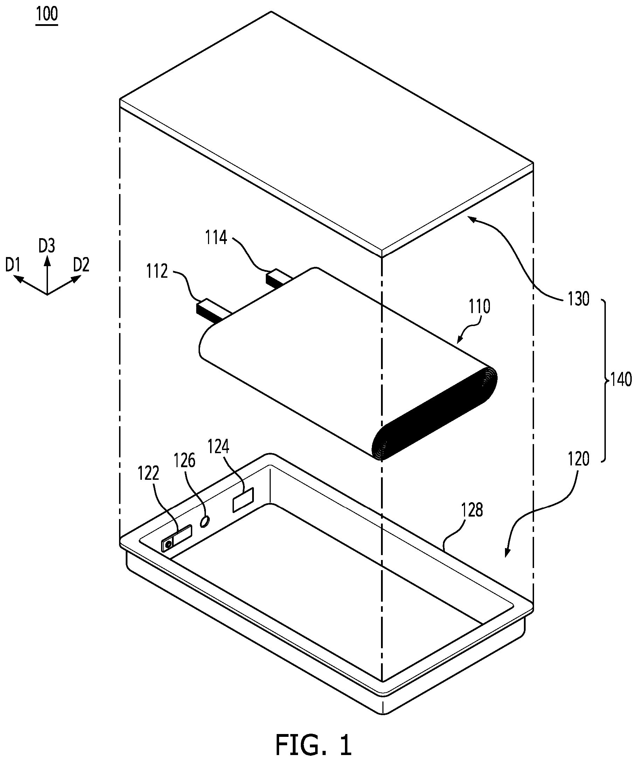

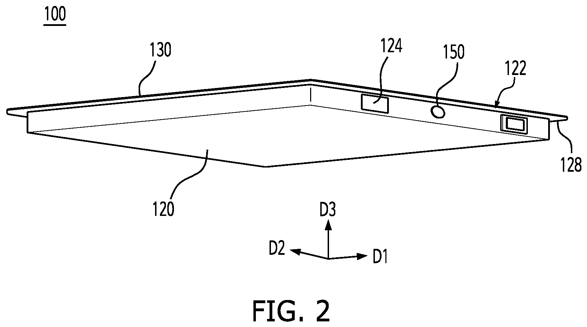

FIG. 1 illustrates an exploded perspective view of a secondary battery 100 according to an embodiment of the present invention, and FIG. 2 illustrates an assembled perspective view of the secondary battery 100 according to an embodiment of the present invention.

In one embodiment, the secondary battery 100 may include an electrode assembly 110 and a case 140 accommodating the electrode assembly 110. The electrode assembly 110 may include a positive electrode, a separator, and a negative electrode. The case 140 may include a case body 120 accommodating the electrode assembly 110 and having one opened surface (e.g., one surface of the case body 120 in a direction D3 may be open) and a cover 130 seated on the opened surface of the case body 120 and coupled to the case body 120. In one or more embodiments, the electrode assembly 110 may be wound or stacked with the separator, which is an insulator, between the positive electrode and the negative electrode. In one or more embodiments, the case 140 shown in FIG. 1 may be formed from or at least include stainless steel (SUS), and the secondary battery 100 may be a SUS can-type secondary battery, but the present invention is not limited thereto. For example, the case 140 may be made of a conductive metal such as aluminum, an aluminum alloy, or nickel-plated steel to form the overall exterior of the secondary battery 100.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

In one embodiment, the electrode assembly 110 may have a positive electrode tab 112 connected to one side of the positive electrode and a negative electrode tab 114 connected to one side of the negative electrode. The positive electrode tab 112 and the negative electrode tab 114 may be connected by welding tabs to uncoated portions of the positive electrode and the negative electrode, respectively, and may be formed by punching the uncoated portions of the positive electrode and the negative electrode. In the wound state, the positive electrode tab 112 and the negative electrode tab 114 may be parallel (or substantially parallel) and spaced apart from each other by a certain interval (e.g., in the D2 direction) along the same side of the electrode assembly 110. However, the positive electrode tab 112 and the negative electrode tab 114 may be positioned on different sides of the secondary battery. The electrode assembly 110 may have any suitable structure including electrode tabs 112, 114.

In one embodiment, the case body 120 may include a positive electrode terminal 122 and a negative electrode terminal 124. The positive electrode terminal 122 may be electrically connected to the positive electrode tab 112 of the electrode assembly 110, and the negative electrode terminal 124 may be electrically connected to the negative electrode tab 114 of the electrode assembly 110. In some embodiments, the positive electrode terminal 122 and the negative electrode terminal 124 may be on another surface of the case body 120 (e.g., one surface of the case body 120 extending in the direction D1). The positions of the positive electrode terminal 122 and the negative electrode terminal 124 according to the present invention are not limited to the positions shown in FIG. 1 and may have any other suitable locations.

In one embodiment, the case body 120 may include an electrolyte injection port 126. For example, the electrolyte injection port 126 may be a through hole in one surface of the case body 120 (e.g., one surface of the case body 120 extending in the direction D1) and may be configured to accept an electrolyte injected into the case of the secondary battery 100 after the case body 120 and the cover 130 are coupled and sealed. After the electrolyte is injected, a vent plate 150 may be coupled (e.g., joined) to the electrolyte injection port 126. The electrolyte injection port 126 according to one embodiment is positioned between the positive electrode terminal 122 and the negative electrode terminal 124, but the present invention is not limited thereto, and the electrolyte injection port 126 may be in any other suitable location.

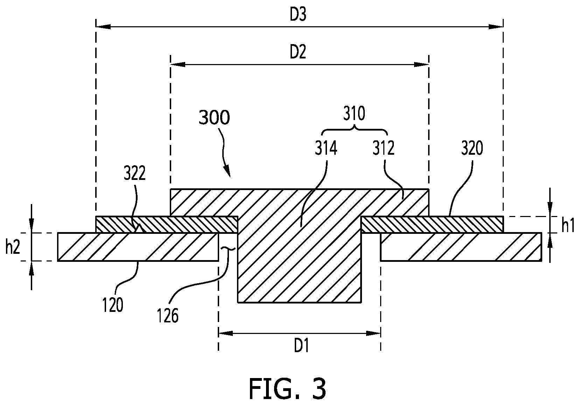

In one embodiment, the vent plate 150 may include a first vent member including a head portion positioned on the outside of the case 140 and a protrusion protruding from the head portion toward the inside of the case 140 and inserted into the electrolyte injection port 126, and a second vent member coupled to the first vent member. The second vent member may be a thin film. In some embodiments, the thickness of the second vent member may be less than the thickness of the case. Accordingly, in a situation in which the internal gas pressure of the secondary battery 100 is high, the second vent member may be ruptured and the internal gas may be discharged to the outside. Examples of the vent plate 150 are described in detail below with reference to FIGS. 3 to 10.

In one embodiment, the case body 120 may include an accommodation portion and a flange 128. In one or more embodiments, the accommodation portion for accommodating the electrode assembly 110 may be in the approximate central portion of the case body 120 by press processing or the like. In some embodiments, the flange 128 may extend outward from the upper end of the accommodation portion. For example, in one or more embodiments, the flange 128 may extend outward in four directions from the upper edge of the accommodation portion.

In one embodiment, the case body 120 and the cover 130 may be coupled together to form the exterior of the secondary battery 100. For example, the case body 120 and the cover 130 may be metal-bonded (e.g., welding, brazing, soldering, etc.). In one embodiment, the flange 128 of the case body 120 and the edge of the cover 130 may be coupled (e.g., joined) to each other. In some embodiments, after the case body 120 and the cover 130 are joined to each other, at least a portion of the flange 128 may be cut (e.g., using a laser) to improve the energy density of the secondary battery 100.

The secondary battery 100 may be a lithium battery cell, a sodium battery cell, or the like. The secondary battery 100 may be any battery that is capable of repeatedly providing electricity through charging and discharging. In an embodiment, in a case in which the secondary battery 100 is a lithium battery cell, the lithium battery cell may be used in electric vehicles (EVs) because the lithium battery cell has excellent lifespan characteristics and high-rate characteristics. For example, the lithium battery cell may be used in EVs such as plug-in hybrid electric vehicles (PHEVs). In addition, the lithium battery cell may be used in the fields that require a large amount of power storage. For example, the lithium battery cell may be used in electric bicycles, power tools, and the like.

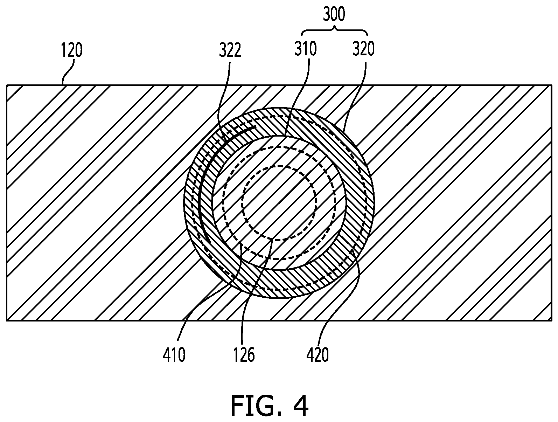

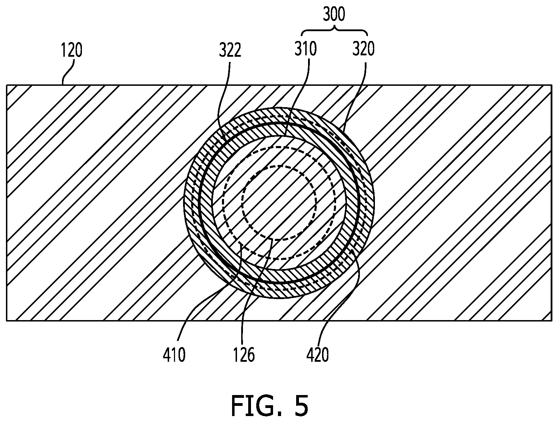

FIG. 3 illustrates a cross-sectional view of a vent plate 300 according to an embodiment of the present invention, FIG. 4 illustrates a front view of the vent plate 300 according to an embodiment of the present invention, and FIG. 5 illustrates a front view of the vent plate 300 according to another embodiment of the present invention.

According to the invention, the vent plate 300 includes a first vent member 310 in the electrolyte injection port 126 of a case (or, the case body 120 of FIG. 1) of a secondary battery and a second vent member 320 coupled to the first vent member 310. The first vent member 310 includes a head portion 312 on an outside of the case body 120 and a protrusion 314 protruding from approximately the center of the head portion 312 toward the inside of the case body 120 and extending into the electrolyte injection port 126.

In one embodiment, a diameter D2 of the head portion 312 may be greater than a diameter D1 of the electrolyte injection port 126. In addition, an outer diameter D3 of the second vent member 320 may be greater than the diameter D2 of the head portion 312 such that the second vent member 320 extends outward beyond the head portion 312. Additionally, the diameter of the protrusion 314 may be less than the diameter of the electrolyte injection port 126. In an embodiment, the diameter of the head portion 312 may be greater than a diameter of the electrolyte injection port 126. In an embodiment, the diameter of the second vent member 320 may be greater than the diameter of the head portion 312.

In some embodiments, the inner diameter of the second vent member 320 may be equal to (or substantially equal to) or greater than the diameter of the protrusion 314. In some embodiments, the diameter of the head portion 312 may be greater than the inner diameter of the second vent member 320 and less than the outer diameter of the second vent member 320.

In one embodiment, the material of the first vent member 310 may be the same as the material of the case body 120. For example, the material of the first vent member 310 and the material of the case body 120 may include stainless steel. In some embodiments, the material of the first vent member 310 may include a metal suitable as a negative electrode, such as copper (Cu) or nickel (Ni).

In one embodiment, the second vent member 320 may be a thin film. For example, the second vent member 320 may include at least one of a metal foil (e.g., Cu foil) or a polymer film, but the present invention is not limited thereto. In some embodiments, the thickness of the second vent member 320 may be less than the thickness of the case body 120. For example, the thickness of the second vent member 320 may be in a range from approximately 5 µm to approximately 10 µm, but the present invention is not limited thereto, and the thickness of the second vent member 320 may be based on, for example, the internal pressure control of the secondary battery, etc.

In one embodiment, the second vent member 320 may be coupled (e.g., joined) to the lower surface of the head portion 312. Referring to FIGS. 4 and 5, the second vent member 320 may include a first region 410 joined to the lower surface of the head portion 312 and a second region 420 outside the first region 410 and coupled (e.g., joined) to the case body 120. In an embodiment, the second region 420 may be outside the electrolyte injection port 126. The first region 410 and the second region 420 may represent regions to be welded. For example, the first region 410 may represent a region where the second vent member 320 and the head portion 312 are joined by ultrasonic welding or the like, and the second region 420 may represent a region where the second vent member 320 and the case body 120 are joined by ultrasonic welding or the like. In this manner, the electrolyte injection port 126 may be sealed by the vent plate 300.

In one embodiment, the second vent member 320 may include a rupture portion 322 (formed, for example, by engraving) in at least a portion between the first region 410 and the second region 420. Referring to FIG. 3, the rupture portion 322 may include a groove formed by notching from the lower surface of the second vent member 320 toward the upper surface of the second vent member 320. Referring to FIG. 4, the rupture portion 322 may have an open shape (e.g., the rupture portion 322 may extend only partially around the second vent member 320). In some embodiments, referring to FIG. 5, the rupture portion 322 may have a closed shape (e.g., the rupture portion 322 may extend completely around the second vent member 320, for example, in a circular shape or a polygonal shape). In a situation in which the internal gas pressure of the case body 120 increases, the second vent member 320 may be readily opened by the rupture portion 322.

In FIGS. 4 and 5, the first region 410 and the second region 420 are shown as being circular, but the present invention is not limited thereto, and the first region 410 and the second region 420 may be formed in various polygonal shapes.

With this configuration, the vent plate 300 may be configured to function as a safety vent while sealing the electrolyte injection port 126. That is, in a situation in which the internal gas pressure of the secondary battery 100 increases, the second vent member 320 of the vent plate 300 may rupture, causing the internal gas of the secondary battery 100 to be discharged to the outside. Accordingly, the safety of the secondary battery may be improved.

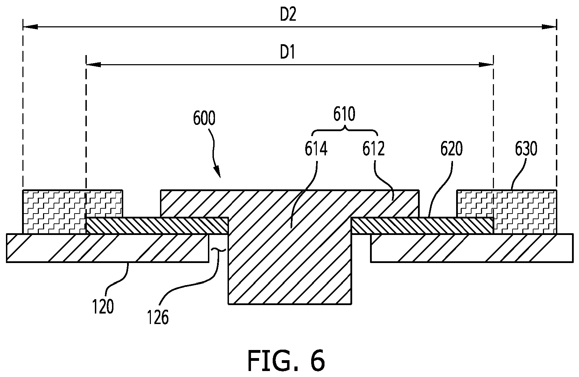

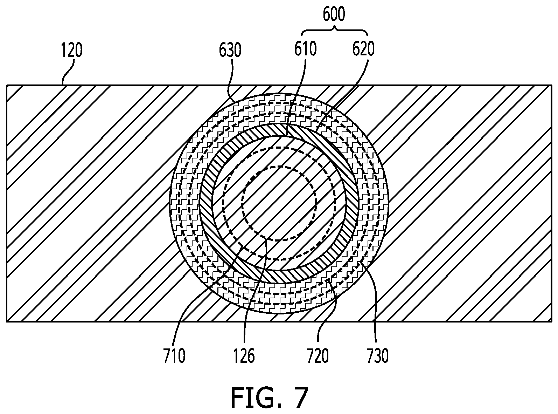

FIG. 6 illustrates a cross-sectional view showing a vent plate 600 according to an embodiment of the present invention, and FIG. 7 illustrates a cross-sectional view showing the vent plate 600 according to an embodiment of the present invention.

In one embodiment, the vent plate 600 may include a first vent member 610 in an electrolyte injection port 126 of a case (or, the case body 120 of FIG. 1) of a secondary battery, a second vent member 620 coupled (e.g., joined) to the first vent member 610, and a third vent member 630 spaced apart from the first vent member 610 and coupled (e.g., joined) to the second vent member 620. The first vent member 610 may include a head portion 612 on an outside of the case body 120 and a protrusion 614 protruding from approximately the center of the head portion 612 toward the inside of the case body 120 and extending into the electrolyte injection port 126.

In one embodiment, the diameter of the head portion 612 may be greater than the diameter of the electrolyte injection port 126. In addition, an outer diameter D1 of the second vent member 620 may be greater than the diameter of the head portion 612. In addition, an outer diameter D2 of the third vent member 630 may be greater than the outer diameter D1 of the second vent member 620.

In some embodiments, the inner diameter of the second vent member 620 may be equal to (or substantially equal to) or greater than the diameter of the protrusion 614. In some embodiments, the diameter of the head portion 612 may be greater than the inner diameter of the second vent member 620 and less than the outer diameter D1 of the second vent member 620. In some embodiments, the outer diameter D1 of the second vent member 620 may be greater than the inner diameter of the third vent member 630 and less than the outer diameter D2 of the third vent member 630.

In one embodiment, the material of the first vent member 610, the material of the third vent member 630, and the material of the case body 120 may be the same. For example, the material of the first vent member 610, the material of the third vent member 630, and the material of the case body 120 may include stainless steel (SUS). In some embodiments, the material of the first vent member 610 and the material of the third vent member 630 may include a metal suitable as a negative electrode, such as copper (Cu) or nickel (Ni).

In one embodiment, the second vent member 620 may be a thin film. For example, the second vent member 620 may include at least one of a metal foil (e.g., Cu foil) or a polymer film, but the present invention is not limited thereto. In some embodiments, the thickness of the second vent member 620 may be less than the thickness of the case body 120. For example, the thickness of the second vent member 620 may be in a range from approximately 5 µm to approximately 10 µm, but the present invention is not limited thereto, and the thickness of the second vent member 620 may be based on, for example, internal pressure control of the secondary battery, etc. In a situation in which the internal gas pressure of the secondary battery increases, the second vent member 620 positioned between the first vent member 610 and the third vent member 630 may be ruptured, causing the internal gas to be discharged to the outside.

In one embodiment, the second vent member 620 may be coupled (e.g., joined) to the lower surface of the head portion 612. In some embodiments, the third vent member 630 may be coupled (e.g., joined) to at least a portion of the upper surface of the second vent member 620. That is, the head portion 612 of the first vent member 610 and the third vent member 630 may be positioned on (e.g., overlap) at least a portion of the upper surface of the second vent member 620.

Referring to FIG. 7, the second vent member 620 may include a first region 710 coupled (e.g., joined) to the head portion 612 and a second region 720 outside the first region 710 and coupled (e.g., joined) to the third vent member 630. In some embodiments, the third vent member 630 may include a third region 730 outside the second region 720 and coupled (e.g., joined) to the case body 120. The first region 710, the second region 720, and the third region 730 may represent regions to be welded. For example, the first region 710 may represent a region where the second vent member 620 and the head portion 612 are joined by ultrasonic welding or the like, the second region 720 may represent a region where the second vent member 620 and the third vent member 630 are joined by ultrasonic welding or the like, and the third region 730 may represent a region where the third vent member 630 and the case body 120 are joined by ultrasonic welding or the like. In this manner, the electrolyte injection port 126 may be sealed by the vent plate 600.

In one embodiment, the second vent member 620 may include a rupture portion (formed, for example, by engraving) in at least a portion between the first region 710 and the second region 720. In one or more embodiments, the rupture portion in the second vent member 620 may be between the first vent member 610 and the third vent member 630. The rupture portion may include a groove formed by notching from the lower surface of the second vent member 620 toward the upper surface thereof. The rupture portion may have an opened shape (e.g., extending only partially around the second vent member 620) or a closed shape (e.g., extending completely around the second vent member 620). In a situation in which the internal gas pressure of the case body 120 increases, the second vent member 620 may be readily opened by the rupture portion.

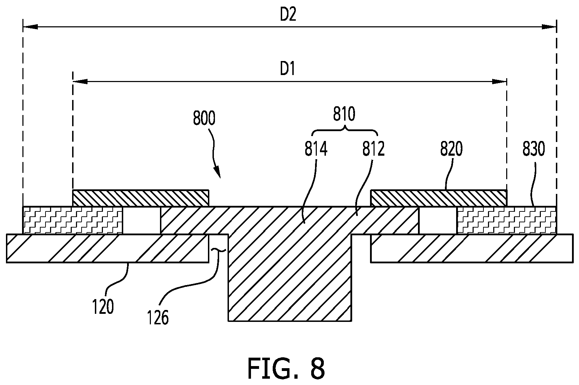

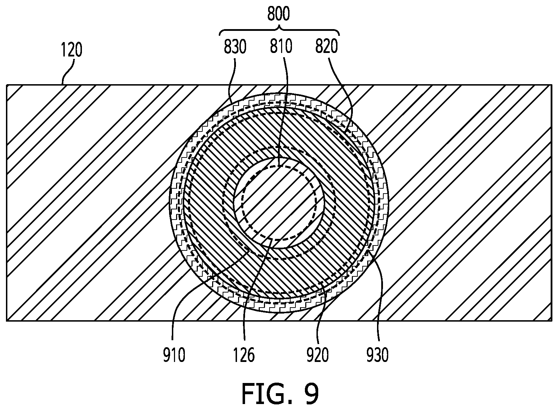

FIG. 8 illustrates a cross-sectional view showing a vent plate 800 according to an embodiment of the present invention, and FIG. 9 illustrates a cross-sectional view showing the vent plate 800 according to an embodiment of the present invention.

In one embodiment, the vent plate 800 may include a first vent member 810 in an electrolyte injection port 126 of a case (or, the case body 120 of FIG. 1) of a secondary battery, a second vent member 820 coupled (e.g., joined) to the first vent member 810, and a third vent member 830 spaced apart from the first vent member 810 and coupled (e.g., joined) to the second vent member 820. The first vent member 810 may include a head portion 812 on an outside of the case body 120 and a protrusion 814 protruding from approximately the center of the head portion 812 toward the inside of the case body 120 and extending into the electrolyte injection port 126.

In one embodiment, the diameter of the head portion 812 may be greater than the diameter of the electrolyte injection port 126. In addition, an outer diameter D1 of the second vent member 820 may be greater than the diameter of the head portion 812. In addition, an outer diameter D2 of the third vent member 830 may be greater than the outer diameter D1 of the second vent member 820.

In some embodiments, the inner diameter of the second vent member 820 may be equal to (or substantially equal to) or greater than the diameter of the protrusion 814. In some embodiments, the diameter of the head portion 812 may be greater than the inner diameter of the second vent member 820 and less than the outer diameter D1 of the second vent member 820. In some embodiments, the outer diameter D1 of the second vent member 820 may be greater than the inner diameter of the third vent member 830 and less than the outer diameter D2 of the third vent member 830.

In one embodiment, the material of the first vent member 810, the material of the third vent member 830, and the material of the case body 120 may be the same as each other. For example, the material of the first vent member 810, the material of the third vent member 830, and the material of the case body 120 may include stainless steel (SUS). In some embodiments, the material of the first vent member 810 and the material of the third vent member 830 may include a metal suitable as a negative electrode, such as copper (Cu) or nickel (Ni).

In one embodiment, the second vent member 820 may be a thin film. For example, the second vent member 820 may include at least one of a metal foil (e.g., Cu foil) or a polymer film, but the present invention is not limited thereto. In some embodiments, the thickness of the second vent member 820 may be less than the thickness of the case body 120. For example, the thickness of the second vent member 820 may be in a range from approximately 5 µm to approximately 10 µm, but the present invention is not limited thereto, and the thickness of the second vent member 820 may be based on, for example, the internal pressure control of the secondary battery, etc. In a situation in which the internal gas pressure of the secondary battery increases, the second vent member 820 between the first vent member 810 and the third vent member 830 may be ruptured, causing the internal gas to be discharged to the outside.

In one embodiment, the second vent member 820 may be coupled (e.g., joined) to at least a portion of the upper surface of the head portion 812. In some embodiments, the third vent member 830 may be coupled (e.g., joined) to at least a portion of the lower surface of the second vent member 820. That is, the head portion 812 of the first vent member 810 and the third vent member 830 may be on at least a portion of the lower surface of the second vent member 820.

Referring to FIG. 9, the second vent member 820 may include a first region 910 coupled (e.g., joined) to the head portion 812 and a second region 920 outside the first region 910 and coupled (e.g., joined) to the third vent member 830. In some embodiments, the third vent member 830 may include a third region 930 outside the second region 920 and coupled (e.g., joined) to the case body 120. The first region 910, the second region 920, and the third region 930 may represent regions to be welded. For example, the first region 910 may represent a region where the second vent member 820 and the head portion 812 are joined by ultrasonic welding or the like, the second region 920 may represent a region where the second vent member 820 and the third vent member 830 are joined by ultrasonic welding or the like, and the third region 930 may represent a region where the third vent member 830 and the case body 120 are joined by ultrasonic welding or the like. In this manner, the electrolyte injection port 126 may be sealed by the vent plate 800.

In one embodiment, the second vent member 820 may include a rupture portion (e.g., formed by engraving) in at least a portion between the first region 910 and the second region 920. In one or more embodiments, the rupture portion may be in the second vent member 820 between the first vent member 810 and the third vent member 830. The rupture portion may include a groove formed by notching from the lower surface of the second vent member 820 toward the upper surface thereof. The rupture portion may have an opened shape (e.g., extending only partially around the second vent member 820) or a closed shape (e.g., extending completely around the second vent member 820). In a situation in which the internal gas pressure of the case body 120 increases, the second vent member 820 may be readily opened by the rupture portion.

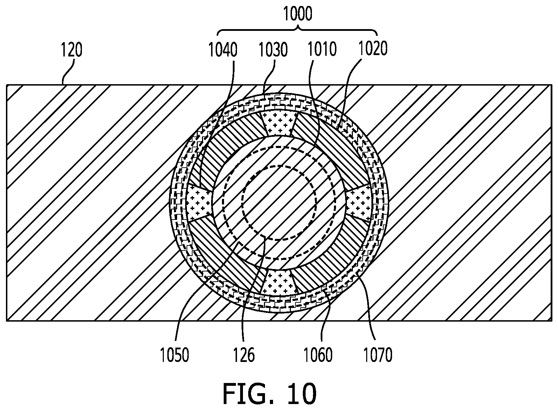

FIG. 10 illustrates a cross-sectional view of a vent plate 1000 according to an embodiment of the present invention. In one embodiment, the vent plate 1000 may include a first vent member 1010 in an electrolyte injection port 126 of a case (or, the case body 120 of FIG. 1) of a secondary battery, a second vent member 1020 coupled (e.g., joined) to the first vent member 1010, and a third vent member 1030 spaced apart from the first vent member 1010 and coupled (e.g., joined) to the second vent member 1020.

In one embodiment, the diameter of the first vent member 1010 may be greater than the diameter of the electrolyte injection port 126. In addition, the outer diameter of the second vent member 1020 may be greater than the diameter of the first vent member 1010. In addition, the diameter outer of the third vent member 1030 may be greater than the outer diameter of the second vent member 1020.

In one embodiment, the vent plate 1000 may include at least one connecting member 1040 connecting the first vent member 1010 and the third vent member 1030. In one or more embodiments, the connecting member 1040 may connect the outer side of the first vent member 1010 and the inner side of the third vent member 1030. The connecting member 1040 may firmly support the first vent member 1010 and the third vent member 1030. In some embodiments, in a situation in which the internal pressure of the secondary battery increases, pressure may be induced in the second vent member 1020 that is not in contact with the connecting member 1040, and thus, the second vent member 1020 may be readily ruptured.

In FIG. 10, the first vent member 1010, the third vent member 1030, and the connecting member 1040 are shown as separate components, but the present invention is not limited thereto, and the first vent member 1010, the third vent member 1030, and the connecting member 1040 may be integral with each other. In some embodiments, although four connecting members 1040 are shown in FIG. 10, the present invention is not limited thereto, and the secondary battery may include any suitable number of connecting members 1040.

In one embodiment, the material of the first vent member 1010, the material of the third vent member 1030, the material of the connecting member 1040, and the material of the case body 120 may be the same as each other. For example, the material of the first vent member 1010, the material of the third vent member 1030, the material of the connecting member 1040, and the material of the case body 120 may include stainless steel (SUS). In some embodiments, the material of the first vent member 1010, the material of the third vent member 1030, and the material of the connecting member 1040 may include a metal suitable as a negative electrode, such as copper (Cu) or nickel (Ni).

In one embodiment, the second vent member 1020 may be a thin film. For example, the second vent member 1020 may include at least one of a metal foil (e.g., Cu foil) or a polymer film, but the present invention is not limited thereto. In some embodiments, the thickness of the second vent member 1020 may be less than the thickness of the case body 120. For example, the thickness of the second vent member 1020 may be in a range from approximately 5 µm to approximately 10 µm, but the present invention is not limited thereto, and the thickness of the second vent member 1020 may be based on, for example, the internal pressure control of the secondary battery, etc. In a situation in which the internal gas pressure of the secondary battery increases, the second vent member 1020 between the first vent member 1010 and the third vent member 1030 may be ruptured, causing the internal gas to be discharged to the outside.

In one embodiment, the second vent member 1020 may be coupled (e.g., joined) to at least a portion of the upper surface of the head portion 1012. In some embodiments, the third vent member 1030 may be joined to at least a portion of the lower surface of the second vent member 1020. In this embodiment, the connecting member 1040 may be coupled (e.g., joined) to at least a portion of the lower surface of the second vent member 1020. That is, the head portion 1012 of the first vent member 1010, the third vent member 1030, and the connecting member 1040 may be positioned on at least a portion of the lower surface of the second vent member 1020.

In one embodiment, the second vent member 1020 may be coupled (e.g., joined) to at least a portion of the lower surface of the head portion 1012. In some embodiments, the third vent member 1030 may be joined to at least a portion of the upper surface of the second vent member 1020. In this embodiment, the connecting member 1040 may be joined to at least a portion of the upper surface of the second vent member 1020. That is, the head portion 1012 of the first vent member 1010, the third vent member 1030, and the connecting member 1040 may be on at least a portion of the upper surface of the second vent member 1020.

In an embodiment, the second vent member 1020 may include a first region 1050 coupled (e.g., joined) to the first vent member 1010 and a second region 1060 outside the first region 1050 and coupled (e.g., joined) to the third vent member 1030. In some embodiments, the third vent member 1030 may include a third region 1070 outside the second region 1060 and coupled (e.g., joined) to the case body 120. The first region 1050, the second region 1060, and the third region 1070 may represent regions to be welded. For example, the first region 1050 may represent a region where the second vent member 1020 and the first vent member 1010 are joined by ultrasonic welding or the like, the second region 1060 may represent a region where the second vent member 1020 and the third vent member 1030 are joined by ultrasonic welding or the like, and the third region 1070 may represent a region where the third vent member 1030 and the case body 120 are joined by ultrasonic welding or the like. In this manner, the electrolyte injection port 126 may be sealed by the vent plate 1000.

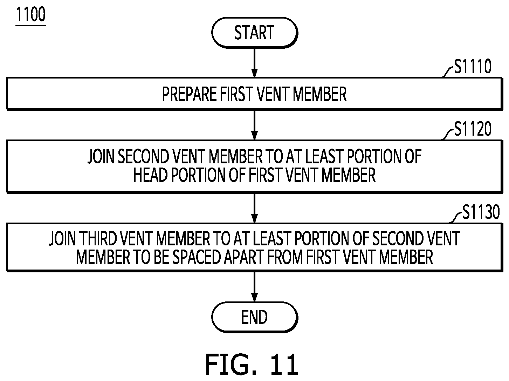

FIG. 11 illustrates a flowchart illustrating aspects of a method 1100 for manufacturing a vent plate according to an embodiment of the present invention. In one embodiment, the method 1100 for manufacturing a vent plate may begin by preparing a first vent member (S1110). The first vent member may include a head portion and a protrusion protruding from the head portion. The task S1110 may include positioning the head portion on the outside of a case of a secondary battery and inserting the protrusion into an electrolyte injection port of the secondary battery such that the protrusion extends inward toward an interior of the secondary battery.

Thereafter, a second vent member may be joined to at least a portion of the head portion of the first vent member (S1120). The second vent member may be a thin film. For example, the second vent member may include at least one of a metal foil or a polymer film. In some embodiments, the thickness of the second vent member may be less than the thickness of the case.

Thereafter, a third vent member may be joined to at least a portion of the second vent member such that the second vent member is spaced apart from the first vent member (S1130). In one or more embodiments, the second vent member may be joined to the lower surface of the head portion, and the third vent member may be joined to at least a portion of the upper surface of the second vent member. In some embodiments, the second vent member may be joined to at least a portion of the upper surface of the head portion, and the third vent member may be joined to at least a portion of the lower surface of the second vent member.

In one embodiment, the diameter of the head portion may be greater than the diameter of the electrolyte injection port. In some embodiments, the outer diameter of the second vent member may be greater than the diameter of the head portion. In addition, the outer diameter of the third vent member may be greater than the outer diameter of the second vent member.

In one embodiment, the second vent member may include a first region coupled (e.g., joined) to the head portion and a second region positioned outside the first region and coupled (e.g., joined) to the third vent member. The second vent member may include a rupture portion (e.g., formed by engraving) in at least a portion between the first region and the second region. In some embodiments, the third vent member may include a third region outside the second region and coupled (e.g., joined) to the case.

In one embodiment, at least one connecting member connecting the first vent member and the third vent member may be further included. In one or more embodiments, the material of the first vent member, the material of the third vent member, the material of the connecting member, and the material of the case may be the same as each other.

### DESCRIPTION OF SOME REFERENCE SYMBOLS

- 100:: secondary battery
- 110:: electrode assembly
- 112:: positive electrode tab
- 114:: negative electrode tab
- 120:: case body
- 122:: positive electrode terminal
- 124:: negative electrode terminal
- 126:: electrolyte injection port
- 128:: flange
- 130:: cover
- 140:: case
- 150:: vent plate

## Claims

1. A vent plate (300, 600, 800) comprising:
a first vent member (310, 610, 810) in an electrolyte injection port (126) of a case (140) of a secondary battery (100); and
a second vent member (320, 620, 820) coupled to the first vent member (310, 610),
wherein the first vent member (310, 610, 810) comprises:
a head portion (312, 612, 812) on an outside of the case (140); and
a protrusion (314, 614, 814) protruding from the head portion (312, 612, 812) toward an inside of the case (140) and in the electrolyte injection port (126),
wherein the second vent member (320, 620, 820) is a thin film, and
the second vent member (320, 620, 820) is disposed between an upper surface of the case (140) and a lower surface of the head portion (312, 612, 812).

2. The vent plate (300, 600, 800) as claimed in claim 1, wherein a diameter of the head portion (312, 612, 812) is greater than a diameter of the electrolyte injection port (126), and
wherein a diameter of the second vent member (320, 620, 820) is greater than the diameter of the head portion (312, 612, 812).

3. The vent plate (300, 600, 800) as claimed in claim 1 or 2, wherein the second vent member (320, 620, 820) is coupled to a lower surface of the head portion (312, 612, 812).

4. The vent plate (300, 600, 800) as claimed in claim 3, wherein the second vent member (320, 620, 820) comprises:
a first region (410, 710, 910) coupled to the lower surface of the head portion (312, 612, 812); and
a second region (420, 720, 920) outside the first region (410, 710, 910) and coupled to the case (140),
wherein the second region (420, 720, 920) is outside the electrolyte injection port (126).

5. The vent plate (300) as claimed in any of claims 1 to 4, wherein the second vent member (320) comprises a rupture portion (322) in at least a portion between the first region (410) and the second region (420).

6. The vent plate (300, 600, 800) as claimed in any of claims 1 to 5, wherein a thickness of the second vent member (320, 620, 820) is less than a thickness of the case (140).

7. The vent plate (600, 800) as claimed in any of claims 1 to 6, further comprising a third vent member (630, 830) spaced apart from the first vent member (610, 810) and coupled to the second vent member (620, 820).

8. The vent plate (600, 800) as claimed in claim 7, wherein a diameter of the third vent member (630, 830) is greater than a diameter of the second vent member (620, 820).

9. The vent plate (600, 800) as claimed in claim 7 or 8, wherein the second vent member (620, 820) is coupled to a lower surface of the head portion (612, 812), and
wherein the third vent member (630, 830) is coupled to at least a portion of an upper surface of the second vent member (620, 820).

10. The vent plate (800) as claimed in any of claims 7 to 9, wherein the second vent member (820) is coupled to at least a portion of an upper surface of the head portion (812), and
wherein the third vent member (830) is coupled to at least a portion of a lower surface of the second vent member (820).

11. The vent plate (800) as claimed in any of claims 7 to 10, wherein the second vent member (820) comprises:
a first region (910) coupled to the head portion (812); and
a second region (920) outside the first region (910) and coupled to the third vent member (830),
wherein the third vent member (830) comprises a third region outside the second region (920) and coupled to the case (140).

12. The vent plate (1000) as claimed in any of claims 7 to 11, further comprising at least one connecting member (1040) connecting the first vent member (1010) to the third vent member (1030).

13. A secondary battery (100) comprising:
an electrode assembly (110) comprising a positive electrode, a separator, and a negative electrode;
a case (140) configured to accommodate the electrode assembly (110);
an electrolyte injection port (126) on one surface of the case (140); and
a vent plate (300, 600, 800) according to claim 1 coupled to the electrolyte injection port (126).

14. The secondary battery (100) as claimed in claim 13, wherein a thickness of the second vent member (320, 620, 8200) is less than a thickness of the case (140).

15. The secondary battery (100) according to claim 13,
wherein the case (140) comprises a case body (120) having one opened surface and a cover (130) seated on the opened surface and coupled to the case body (120),
wherein the case body (120) comprises an accommodation portion in which the electrode assembly is accommodated and a flange (128) extending outward from an upper end of the accommodation portion, and
wherein the cover is coupled to the flange (128).
